(19) **Europäisches Patentamt / European Patent Office / Office européen des brevets**

(11) **EP 4 760 951 A1**

(12) # EUROPEAN PATENT APPLICATION
published in accordance with Art. 153(4) EPC

(43) Date of publication:
**17.06.2026 Bulletin 2026/25**

(21) Application number: **24854194.8**

(22) Date of filing: **09.08.2024**

(51) International Patent Classification (IPC):
*H01M 50/44* (2021.01)     *H01M 10/0562* (2010.01)
*H01M 50/417* (2021.01)    *H01M 50/434* (2021.01)
*H01M 50/443* (2021.01)    *H01M 50/446* (2021.01)
*H01M 50/489* (2021.01)    *H01M 50/491* (2021.01)

(52) Cooperative Patent Classification (CPC):
**H01M 10/0562; H01M 50/417; H01M 50/434;
H01M 50/44; H01M 50/443; H01M 50/446;
H01M 50/489; H01M 50/491;** Y02E 60/10

(86) International application number:
**PCT/JP2024/028769**

(87) International publication number:
**WO 2025/037605 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 JP 2023131710**

(71) Applicant: **Japan Vilene Company, Ltd.
Tokyo 104-8423 (JP)**

(72) Inventors:
 • **YAMAMOTO, Emi
   Koga-shi, Ibaraki 306-0213 (JP)**
 • **KAWANO, Akihiko
   Koga-shi, Ibaraki 306-0213 (JP)**
 • **TARAO, Takashi
   Koga-shi, Ibaraki 306-0213 (JP)**
 • **TANAKA, Masanao
   Koga-shi, Ibaraki 306-0213 (JP)**

(74) Representative: **Cohausz & Florack
Patent- & Rechtsanwälte
Partnerschaftsgesellschaft mbB
Bleichstraße 14
40211 Düsseldorf (DE)**

(54) **SUPPORT FOR SOLID ELECTROLYTE FILM**

(57)     The present invention is a support for solid electrolyte membranes comprising a fiber aggregate with a mass per unit area of 6 g/m$^2$ or less, wherein a maximum pore size of the fiber aggregate is less than 210 μm, and a minimum pore size of the fiber aggregate is greater than 8 μm.

EP 4 760 951 A1

**Description**

TECHNICAL FIELD

The present invention relates to a support for solid electrolyte membranes.

BACKGROUND ART

In recent years, development of solid-state batteries such as all-solid-state batteries and semi-solid-state batteries, which are equipped with a solid electrolyte membrane between the cathode and anode, has been actively progressing. In particular, thin solid electrolyte membranes are required to enable the realization of thin solid-state batteries, and solid-state batteries with high power generation performance by reducing internal resistance.

Solid electrolyte particles made from materials such as sulfide-based materials, crystalline oxide-based materials, complex hydride-based materials, halide materials, or polymer materials are employed as constituent materials for such solid electrolyte membranes. The following methods are known for forming a solid electrolyte membrane using said solid electrolyte particles. For example, JP 2021-028869 A (Patent Literature 1) discloses a method for forming a solid electrolyte membrane reinforced by a solid electrolyte membrane support by imparting and carrying solid electrolyte particles onto the solid electrolyte membrane support.

Patent Literature 1 discloses an embodiment in which a fiber aggregate with a mass per unit area of 6 $g/m^2$ or less was used as a support for solid electrolyte membranes. Furthermore, Patent Literature 1 discloses the finding that incorporating ultra-fine fibers with an average fiber diameter of 4 $\mu$m or less enables the realization of a fiber aggregate (a support for solid electrolyte membranes) with uniform pore size. Furthermore, Patent Literature 1 discloses the finding that the average pore size of the fiber aggregate (the support for solid electrolyte membranes) can be adjusted to be equal to or larger than the particle size of the solid electrolyte particles to be carried.

CITATION LIST

PATENT LITERATURE

[PATENT LITERATURE 1] JP 2021-028869 A

SUMMARY OF INVENTION

TECHNICAL PROBLEM

The inventors investigated the realization of thin solid electrolyte membranes. In this investigation, the inventors explored preparing solid electrolyte membranes by carrying solid electrolyte particles into the voids of the fiber aggregate contained in the solid electrolyte membrane support described in the aforementioned prior art. In particular, as a concrete method, solid electrolyte particles were imparted and carried onto one main surface of the solid electrolyte membrane support described in the prior art. Using this method, the inventors investigated preparing solid electrolyte membranes reinforced by the solid electrolyte membrane support.

However, the solid electrolyte membranes prepared through the investigation sometimes possessed large pinholes. Furthermore, since the presence of such large pinholes can cause short circuits, solid-state batteries prepared using such solid electrolyte membranes were considered to have the potential to develop short circuits.

In particular, the problem of solid electrolyte membranes having large pinholes occurred significantly when the mass per unit area of the fiber aggregate contained in the solid electrolyte membrane support was reduced (specifically, when the mass per unit area of the fiber aggregate was reduced to 6 $g/m^2$ or less) in order to realize thin solid electrolyte membranes.

Additionally, the average pore size of the fiber aggregate contained in the solid electrolyte membrane support was adjusted to be equal to or larger than the particle size of the solid electrolyte particles to be carried. However, solid electrolyte particles sometimes had difficulty infiltrating the interior of the solid electrolyte membrane support comprising the fiber aggregate. As a result, in the prepared solid electrolyte membranes, a large amount of solid electrolyte particles sometimes became unevenly distributed on one main surface side (the side imparted with solid electrolyte particles) of the solid electrolyte membrane supports.

In solid electrolyte membranes, solid electrolyte particles are responsible for ion conduction. Therefore, solid electrolyte membranes with such a large amount of solid electrolyte particles distributed unevenly as described above exhibit poor ionic conductivity in the direction of the membrane thickness and high internal resistance. As a result, it was considered difficult to realize solid-state batteries with high power generation performance and reduced internal resistance as long as said solid electrolyte membrane was used.

An object of the present invention is to realize a support for solid electrolyte membranes that enables the realization of a solid electrolyte membrane carrying solid electrolyte particles while preventing the formation of large pinholes. In particular, an objective is to realize a support for solid electrolyte membranes that enables the realization of a solid electrolyte membrane carrying solid electrolyte particles while preventing the uneven distribution of a large amount of solid electrolyte particles on one main surface side of the solid electrolyte membrane support.

SOLUTION TO PROBLEM

The present invention is as follows:

[1] A support for solid electrolyte membranes comprising a fiber aggregate with a mass per unit area of 6 g/m$^2$ or less, wherein a maximum pore size of the fiber aggregate is less than 210 $\mu$m, and a minimum pore size of the fiber aggregate is greater than 8 $\mu$m.

[2] The support for solid electrolyte membranes of [1], wherein a variation in pore sizes of the fiber aggregate is less than 570%.

[3] The support for solid electrolyte membranes of [1], wherein constituent fibers of the fiber aggregate are composed solely of a polyolefin-based resin.

[4] The support for solid electrolyte membranes of [1], wherein the fiber aggregate contains core-sheath composite fibers as its constituent fibers, and the constituent fibers are fiber-bonded to each other by the core-sheath composite fibers.

[5] The support for solid electrolyte membranes of [1], wherein the fiber aggregate has a porosity of 45% or more.

[6] The support for solid electrolyte membranes of [1], wherein the fiber aggregate has a thickness of 25 $\mu$m or less.

[7] A solid electrolyte membrane comprising solid electrolyte particles carried on the support for solid electrolyte membranes of any one of [1] to [6].

[8] A solid-state battery comprising the solid electrolyte membrane of [7].

ADVANTAGEOUS EFFECTS OF INVENTION

As a result of the inventors' continued investigation, it was found that the aforementioned problem could be solved, in a solid electrolyte membrane support comprising a fiber aggregate with a mass per unit area of 6 g/m$^2$ or less, by focusing on the values of the maximum pore size and minimum pore size in the fiber aggregate. The reason the problem is resolved is considered to be due to the following effects being exerted.

When a support for solid electrolyte membranes comprises a fiber aggregate with an excessively large maximum pore size, it was considered that imparting and carrying solid electrolyte particles onto said fiber aggregate would result in the formation of solid electrolyte particle aggregates within the regions possessing said large pore size. Furthermore, during manufacturing steps of solid electrolyte membranes, or during processing steps for use in solid-state batteries, it was considered that when external forces acted on the solid electrolyte membrane, the support for solid electrolyte membranes would deform and said electrolyte particle aggregates would detach, and then, the resulting detachment sites of said aggregates would become large pinholes.

Furthermore, as demonstrated by the examples described later, it was found that whether solid electrolyte particles readily infiltrate the interior of the solid electrolyte membrane support comprising the fiber aggregate depends not on the average pore size of said fiber aggregate, but primarily on the minimum pore size of said fiber aggregate. Therefore, when using a solid electrolyte membrane support comprising a fiber aggregate with an excessively small minimum pore size, solid electrolyte particles have difficulty infiltrating the interior of said solid electrolyte membrane support. As a result, it was considered that a large amount of solid electrolyte particles would become unevenly distributed on one main surface side of the solid electrolyte membrane support. In particular, when solid electrolyte particles were imparted and carried onto one main surface of the solid electrolyte membrane support, it was considered that a large amount of solid electrolyte particles would become unevenly distributed on one main surface side of the solid electrolyte membrane support (the side imparted with solid electrolyte particles).

By contrast, the inventors found that by adjusting the maximum pore size of a fiber aggregate to less than 210 $\mu$m in a solid electrolyte membrane support comprising the fiber aggregate, it is possible to prevent the formation of large pinholes in the prepared solid electrolyte membrane.

Furthermore, by adjusting the minimum pore size of a solid electrolyte membrane support comprising a fiber aggregate to be greater than 8 $\mu$m, solid electrolyte particles can more readily infiltrate the interior of a solid electrolyte membrane support comprising the fiber aggregate. As a result, the inventors found that even when solid electrolyte particles are imparted and carried onto one main surface of the solid electrolyte membrane support, it is possible to prevent a large amount of solid electrolyte particles from being unevenly distributed on one main surface side of the solid electrolyte membrane support. In other words, solid electrolyte particles can be readily introduced from one main surface of the solid electrolyte membrane support through the interior of the solid electrolyte membrane support (within the voids of the fiber aggregate) to the other main surface of the solid electrolyte membrane support.

From the above, the first invention, the support for solid electrolyte membranes, not only prevents the occurrence of short circuits but also, in particular, prevents the uneven distribution of a large amount of solid electrolyte particles on one main surface side. As a result, it enables the realization of a solid electrolyte membrane with high ionic conductivity and reduced internal resistance.

Following the first invention described above, the second invention is a support for solid electrolyte membranes comprising a fiber aggregate with a pore size variation of less than 570%. The solid electrolyte membrane support according to the second invention enables the realization of a solid electrolyte membrane in which solid electrolyte particles are uniformly carried across the main surface direction. As a result, a solid electrolyte membrane with high ionic conductivity can be realized.

The third invention is a support for solid electrolyte membranes comprising a fiber aggregate in which the constituent fibers are composed of a polyolefin-based resin. The solid electrolyte membrane support according to the third invention enables the constituent fibers of the fiber aggregate to possess excellent chemical resistance and other properties, as well as stable chemical and physical characteristics. As a result, a solid electrolyte membrane in which unintended chemical reactions with constituent materials of solid electrolyte membranes or solid-state batteries, such as solid electrolyte particles and electrolyte solutions, are prevented can be realized.

The fourth invention comprises core-sheath composite fibers as its constituent fibers. And it is a support for solid electrolyte membranes comprising a fiber aggregate in which the constituent fibers are fiber-bonded to each other by said core-sheath composite fibers. The fiber aggregate exhibits high rigidity despite having a low mass per unit area of 6 g/m$^2$ or less by the solid electrolyte membrane support according to the fourth invention. Therefore, it can facilitate the infiltration of solid electrolyte particles into the interior of the solid electrolyte membrane support comprising the fiber aggregate. As a result, furthermore, a solid electrolyte membrane with high ionic conductivity and reduced internal resistance can be realized by preventing the uneven distribution of a large amount of solid electrolyte particles on one main surface side.

The fifth invention is a support for solid electrolyte membranes comprising a fiber aggregate with a porosity of 45% or more. The solid electrolyte membrane support according to the fifth invention enables the realization of a solid electrolyte membrane that carries a sufficient amount of solid electrolyte particles and exhibits high ionic conductivity.

The sixth invention is a support for solid electrolyte membranes comprising a fiber aggregate with a thickness of 25 μm or less. The solid electrolyte membrane support according to the sixth invention enables the realization of a solid electrolyte membrane with reduced internal resistance in the direction of the membrane thickness.

Furthermore, by carrying solid electrolyte particles on the solid electrolyte membrane support of the present invention described above, a solid electrolyte membrane can be realized. Furthermore, the use of said solid electrolyte membrane enables the realization of solid-state batteries.

DESCRIPTION OF EMBODIMENTS

In the present invention, various configurations such as the following configurations can be selected as appropriate. Incidentally, unless otherwise described and specified, various measurements described in the present invention are carried out under 25°C temperature conditions under normal pressure. Then, unless otherwise stated, various measurement results explained in the present invention are obtained by measuring a value that is one order of smaller than the desired value, and the obtained value is rounded to the nearest number to the obtained value. As a specific example, in the case where the first decimal place is the desired value, the second decimal place is obtained by measurement, then the first decimal place is calculated by rounding off the obtained value of the second decimal place, and this value is used as the value to be obtained. Furthermore, the upper and lower limits described below can be arbitrarily combined as desired to determine acceptable numerical ranges.

The term "fiber aggregate" as used herein refers to a sheet-like fiber aggregate having a main surface, another main surface existing opposite to said main surface, and a length (thickness) in a direction perpendicular to the main surfaces. Examples of the fiber aggregate include fiber webs, nonwoven fabrics, woven fabrics, and knitted fabrics. In particular, when the fiber aggregate is a fiber web or a nonwoven fabric, solid electrolyte particles readily infiltrate the voids within the fiber web or nonwoven fabric. As a result, it is preferable to realize a solid electrolyte membrane that is rich in ionic conductivity and has reduced internal resistance.

The constituent fibers of the fiber aggregate may be formed using known resins, such as polyolefin-based resins (for example, polyethylene, polypropylene, or polymethylpentene), styrene-based resins, polyether-based resins (for example, polyether ether ketone, polyacetal, modified polyphenylene ether, or aromatic polyether ketone), polyester-based resins (for example, polyethylene terephthalate, polytrimethylene terephthalate, polybutylene terephthalate, polyethylene naphthalate, polybutylene naphthalate, polycarbonate, polyarylate, or fully aromatic polyester resins), polyamideimide resins, polyamide-based resins (for example, aromatic polyamide resins, aromatic polyetheramide resins, or nylon resins), resins containing nitrile groups (for example, polyacrylonitrile), epoxy-based resins, polysulfone-based resins (for example, polysulfone or polyethersulfone), fluorine-based resins (for example, polytetrafluoroethylene or polyvinylidene fluoride), cellulose-based resins, or acrylic-based resins (for example, polyacrylonitrile-based resins obtained by copolymerizing acrylic acid esters or methacrylic acid esters, or modacrylic-based resins obtained by copolymerizing acrylonitrile with vinyl chloride or vinylidene chloride).

In particular, the constituent fibers of the fiber aggregate possess excellent chemical resistance and stable chemical and physical properties, preventing unintended chemical reactions with constituent materials of solid electrolyte membranes or solid-state batteries, such as solid electrolyte particles and electrolyte solutions. Therefore, it is preferable that the constituent fibers of the fiber aggregate comprise polyolefin-based resins, and it is more preferable that they are composed solely of polyolefin-based resins.

These resins may be either linear polymers or branched polymers. Furthermore, the resins may be block copolymers or random copolymers. The three-dimensional structure and the presence or absence of crystallinity of the resins are not particularly limited. Additionally, a blended resin composed of multiple types of resin may be used.

The constituent fibers may be composed of a single type of resin or multiple types of resin. As fibers composed of multiple types of resin, they are generally referred to as composite fibers and may take forms such as a core-sheath type, an islands-in-sea type, a side-by-side type, an orange-type, or a bimetal-type.

The constituent fibers may include not only fibers with a cross-sectional shape that is substantially circular or elliptical, but also fibers with an irregular cross-section. Irregular cross-section fibers may be fibers having a cross-sectional shape, for example, hollow shapes; polygonal shapes such as a triangular shape; alphabet letter-type shapes such as a Y-shape; irregular shapes; multi-leaf shapes; or symbol-type shapes such as an asterisk shape. Alternatively, the irregular cross-section fibers may be fibers having a fiber cross-section in which a plurality of these shapes is combined.

The fiber aggregate may comprise heat-fusible fibers composed solely of low-melting-point component(s), or partially-fused-type heat-fusible composite fibers containing high-melting-point component(s) and low-melting-point component(s). In this case, it is preferable to impart strength to the fiber aggregate by thermally bonding the fibers to each other using low-melting-point component.

In the partially-fused-type heat-fusible composite fiber, the high-melting-point component can serve as the fiber's skeleton. Meanwhile, the low-melting-point component can serve to bond the fibers. Examples of combinations of high-melting-point component and low-melting-point component include polymethylpentene/polypropylene, polymethylpentene/propylene-based copolymer, polymethylpentene/polyethylene, polymethylpentene/ethylene-based copolymer, polypropylene/polyethylene, polypropylene/ethylene-based copolymer, and high-density polyethylene/low-density polyethylene.

In particular, it is preferable that the fiber is a partially-fused-type heat-fusible composite fiber wherein polyethylene or low-melting-point polypropylene is exposed on the fiber surface as the low-melting-point component, and wherein the fiber interior contains polypropylene with a higher melting point than that of the polyethylene or low-melting-point polypropylene as the high-melting-point component. By adopting the partially-fused-type heat-fusible composite fibers as the constituent fibers of the fiber aggregate, the effect of facilitating the infiltration of solid electrolyte particles into the interior of the solid electrolyte membrane support comprising the fiber aggregate is achieved due to its high rigidity. This is preferable because the solid electrolyte membrane support exhibiting the effect can be realized. Furthermore, this is preferable because the solid electrolyte membrane support in which unintended chemical reactions with constituent materials of solid electrolyte membranes or solid-state batteries, such as solid electrolyte particles and electrolyte solutions, are prevented can be realized.

As such partially-fused-type heat-fusible composite fibers, for examples, core-sheath composite fibers can be adopted. In this case, since the low-melting-point component contained in the partially-fused-type heat-fusible composite fibers cause the constituent fibers to adhere to each other, despite having a low mass per unit area of 6 $g/m^2$ or less, the fiber aggregate exhibits high rigidity. Therefore, it can facilitate the infiltration of solid electrolyte particles into the interior of the solid electrolyte membrane support comprising the fiber aggregate. As a result, furthermore, it is preferable to realize a solid electrolyte membrane with high ionic conductivity and reduced internal resistance, by preventing the uneven distribution of a large amount of solid electrolyte particles on one main surface side.

The percentage of the fiber mass of the partially-fused-type heat-fusible composite fibers relative to the total fiber mass constituting the fiber aggregate can be adjusted as appropriate. To facilitate the infiltration of solid electrolyte particles into the interior of the solid electrolyte membrane support comprising the fiber aggregate, due to its high rigidity, it may be 1 to 100 mass%, preferably 10 to 90 mass%, preferably 20 to 80 mass%, and preferably 30 to 70 mass%.

Such partially-fused-type heat-fusible composite fibers preferably have a tensile strength of 2.5 cN/dtex or higher. It is preferable that the partially-fused-type heat-fusible composite fibers cause the constituent fibers to adhere to each other, because the fiber aggregate with higher rigidity can be realized. It is preferable that the tensile strength of the partially-fused-type heat-fusible composite fibers is high, because the aforementioned effects are exerted. Therefore, the tensile strength is preferably 3 cN/dtex or more, more preferably 3.5 cN/dtex or more, and most preferably 4 cN/dtex or more. The upper limit of the tensile strength is not particularly limited, but is appropriately 60 cN/dtex or less. The term "tensile strength" as used herein refers to the value measured using a constant-rate-of-extension (CRE) type tensile testing machine in accordance with JIS L1015:2010, 8.7.1 (Standard Time Test). Measurements are performed under the following conditions: a distance between clamps of 20 mm and a tensile speed of 300 mm/min.

The Young's modulus of partially-fused-type heat-fusible composite fibers can be adjusted as appropriate. The lower limit value may be 10 cN/dtex or more. Furthermore, to serve as a solid electrolyte membrane support that facilitates filling with solid electrolyte particles by comprising a deformable fiber aggregate, it is preferable that the Young's modulus of partially-fused-type heat-fusible composite fibers is 50 cN/dtex or less. Furthermore, it is more preferable to be 40 cN/dtex or less, and it is most preferable to be 30 cN/dtex or less.

The term "Young's modulus" as used herein refers to the apparent Young's modulus value calculated from the initial tensile resistance measured by the method specified in JIS L1015 (Test methods for man-made staple fibres):2010, Section 8.11. The initial tensile resistance refers to the value measured using a constant-rate-of-extension (CRE) type tensile testing machine.

The average fiber diameter and the fiber length of the fibers constituting the fiber aggregate are not particularly limited, and can be adjusted as appropriate.

The average fiber diameter may be 0.5 to 10 $\mu$m, 1 to 7 $\mu$m, 2 to 5 $\mu$m, and thicker than 2.4 $\mu$m to 3.6 $\mu$m or less. The term "average fiber diameter" as used herein refers to the arithmetic mean of the fiber diameters of 50 fibers, measured based on 2000$\times$ electron micrographs of the thickness-direction cross-section or main surface of the measurement target such as a fiber aggregate. If the fiber diameter is too fine for measurement, it can be measured based on electron micrographs at a magnification higher than 2000$\times$. When the cross-sectional shape of a fiber is not circular, the diameter of the fiber may be considered to be the diameter of a circle with the same cross-sectional area as said fiber.

The fiber length of fibers constituting the fiber aggregate may be that of fibers that are not cut to a specific length, such as fibers constituting a meltblown nonwoven fabric or an electrospun nonwoven fabric. Alternatively, it may be that of fibers cut to a specific length. The fiber length of fibers cut to a specific length can be 0.1 to 120 mm, 0.5 to 100 mm, 1 to 80 mm, 1.5 to 50 mm, or 2 to 30 mm. The term "fiber length" as used herein refers to the value measured in accordance with JIS L1015(2010), 8.4.1c) Direct Method (Method C).

The constituent fibers may be obtained by, for example, a melt spinning method, a dry spinning method, a wet spinning method, direct spinning methods (such as a meltblown method, a spunbonding method, and an electrospinning method), a method of extracting fibers with a fine fiber diameter by removing one or more resin components from composite fibers, a method of obtaining split fibers by beating the fibers, and other known methods.

A fiber web may be prepared by, for example, a dry method where the aforementioned fibers are entangled by feeding them into a carding device or an air-laying device; a wet method where fibers are dispersed in a dispersing medium, formed into sheets, and then entangled; a method of spinning fibers using direct spinning methods (such as a meltblown method, a spunbonding method, an electrospinning method, and a method of spinning by simultaneously discharging a spinning solution and a gas flow in parallel (for example, a method disclosed in Japanese Patent Application Publication No. 2009-287138)) while simultaneously collecting them; and other methods.

A nonwoven fabric may be prepared by entangling and/or bonding the constituent fibers of the fiber web prepared using the aforementioned methods. Examples of the method for entangling and/or bonding constituent fibers to each other include a method of entangling them by needles or a water jet. Alternatively, the examples include a method of binder-bonding or thermally-fused bonding constituent fibers to each other using a binder or heat-fusible fibers (such as heat-fusible fibers composed solely of low-melting-point component(s), or partially-fused-type heat-fusible composite fibers containing high-melting-point component(s) and low-melting-point component(s)), for example, by subjecting the fiber web to heat treatment.

A method for heat treatment may be selected as appropriate from, for example, a method of heating or heating under pressure by rollers; a method of heating by supplying to a heating device, such as an oven dryer, a far-infrared heater, a dry-heat dryer, or a hot-air dryer; or a method of heating contained resin(s) by irradiating it with an infrared ray under no pressure.

The support for solid electrolyte membranes of the present invention comprises a fiber aggregate with a mass per unit area of 6 g/m$^2$ or less. In solid electrolyte membranes, the fiber aggregate contained within the support for solid electrolyte membranes can potentially cause an increase in internal resistance. However, in the present invention, by having a mass per unit area of the fiber aggregate of 6 g/m$^2$ or less, it is possible to realize a solid electrolyte membrane with a thin thickness and reduced internal resistance, by suppressing an unnecessary increase in internal resistance.

The mass per unit area of the fiber aggregate is adjusted, as appropriate, to be 6 g/m$^2$ or less. To realize a solid electrolyte membrane with further reduced thickness and internal resistance, the mass per unit area is preferably 5.5 g/m$^2$ or less, preferably 5 g/m$^2$ or less, preferably 4 g/m$^2$ or less, and preferably 3 g/m$^2$ or less. On the other hand, if the mass per unit area of the fiber aggregate is excessively low, the rigidity of the fiber aggregate may unintentionally decrease, potentially making it difficult to infiltrate solid electrolyte particles into the interior of the solid electrolyte membrane support comprising the fiber aggregate. Therefore, a mass per unit area of the fiber aggregate of 0.5 g/m$^2$ or more is realistic, and 1 g/m$^2$ or more is even more realistic. The term "mass per unit area" as used herein refers to the mass per square meter of the main surface, which is the largest surface area.

The inventors found that by adjusting the maximum pore size to less than 210 $\mu$m in a support for solid electrolyte membranes comprising a fiber aggregate, the formation of large pinholes in the prepared solid electrolyte membrane can be prevented.

In addition, by preventing the formation of large pinholes, the number of areas where solid electrolyte particles are in contact with each other within the solid electrolyte membrane is maintained. Therefore, incorporating said solid electrolyte membrane enables the realization of solid-state batteries with superior battery characteristics.

The inventors found that adjusting the minimum pore size of a support for solid electrolyte membranes comprising a fiber aggregate to be greater than 8 $\mu$m facilitates the infiltration of solid electrolyte particles into the interior of the solid electrolyte membrane support comprising the fiber aggregate.

As a result, the inventors found that even when solid electrolyte particles are imparted and carried onto one main surface of the solid electrolyte membrane support, it is possible to carry the solid electrolyte particles while preventing a large amount of solid electrolyte particles from being unevenly distributed on one main surface side of the solid electrolyte membrane support. In other words, solid electrolyte particles can be continuously carried from one main surface of the solid electrolyte membrane support through the interior of the solid electrolyte membrane support (within the voids of the fiber aggregate) to the other main surface of the solid electrolyte membrane support.

The maximum pore size of the fiber aggregate can be adjusted as appropriate to more effectively exert the aforementioned effects. The maximum pore size of the fiber aggregate is preferably 200 $\mu$m or less, preferably 190 $\mu$m or less, preferably 180 $\mu$m or less, and preferably 175 $\mu$m or less. On the other hand, if the maximum pore size is excessively small, solid electrolyte particles may have difficulty infiltrating the voids within the fiber aggregate. Therefore, the maximum pore size of the fiber aggregate is preferably greater than 20 $\mu$m, and more preferably 25 $\mu$m or greater.

The minimum pore size of the fiber aggregate can be adjusted as appropriate to more effectively exert the aforementioned effects. The minimum pore size of the fiber aggregate is preferably 9 $\mu$m or greater, and preferably 10 $\mu$m or greater. On the other hand, the upper limit of the minimum pore size can be adjusted as appropriate, but it can be 60 $\mu$m or less, 50 $\mu$m or less, 40 $\mu$m or less, 30 $\mu$m or less, less than 22 $\mu$m, or 20 $\mu$m or less.

The average pore size of the fiber aggregate in the present invention can be adjusted as appropriate. The average pore size is a value that is greater than or equal to the "minimum pore size" and less than or equal to the "maximum pore size", and may be greater than 8 $\mu$m and less than 210 $\mu$m, may be 10 to 100 $\mu$m, or may be 15 to 75 $\mu$m.

The "maximum pore size", the "minimum pore size", and the "average pore size" refer to values measured by the bubble point method using a Porometer (manufactured by Coulter Corporation). In other words, the measured maximum flow pore size is designated as the "maximum pore size," the measured minimum flow pore size is designated as the "minimum pore size," and the measured average flow pore size is designated as the "average pore size."

A solid electrolyte membrane rich in ionic conductivity with uniformly carried solid electrolyte particles across the main surface direction can be realized by minimizing the variation in pore sizes of the fiber aggregate. Therefore, it is preferable to adjust the variation in pore sizes within the fiber aggregate to less than 570%.

The variation in pore sizes is a calculated value of 100 $\times$ ("maximum pore size" - "minimum pore size") / "average pore size" (unit: %). The smaller the value, the more uniform the pore size distribution of the fiber aggregate.

The pore size variation is preferably 550% or less, preferably 500% or less, preferably 400% or less, and preferably 300% or less. The theoretical minimum value is 0%.

The porosity of the fiber aggregate in the present invention is adjusted as appropriate to realize a solid electrolyte membrane that carries a sufficient amount of solid electrolyte particles and exhibits high ionic conductivity. Furthermore, the porosity of the fiber aggregate is adjusted as appropriate to realize a solid electrolyte membrane possessing the function of buffering the expansion and contraction of the electrodes by exerting cushioning properties.

To carry a sufficient amount of solid electrolyte particles and realize a solid electrolyte membrane exhibiting cushioning properties, the porosity of the fiber aggregate is preferably 45% or more, preferably 50% or more, preferably 55% or more, preferably 60% or more, and preferably 65% or more. On the other hand, the porosity of the fiber aggregate is less than 100%. To prevent the fiber aggregate from being inferior in rigidity, it is preferable to be 99% or less, more preferably 95% or less, and still more preferably 90% or less. The "porosity (P)" (unit: %) refers to the value obtained from the following equation:

$$P = 100 - (Fr1 + Fr2 + \cdots + Frn)$$

Frn denotes the filling rate (%) of the n component constituting the fiber aggregate, and refers to the value obtained from the following equation:

$$Frn = \{(M \times Prn) / (T \times SGn)\} \times 100$$

M denotes the mass per unit area of the fiber aggregate (unit: g/cm$^2$), T denotes the thickness of the fiber aggregate under a 150 kPa load (unit: cm), Prn denotes the mass ratio of presence of n component in the fiber aggregate, and SGn denotes the specific gravity of n component (unit: g/cm$^3$).

By being a support for solid electrolyte membranes comprising a thin fiber aggregate, it enables the realization of a solid electrolyte membrane with reduced internal resistance in the direction of the membrane thickness. Therefore, the thickness of the fiber aggregate is preferably 25 μm or less, and preferably 20 μm or less. On the other hand, when the thickness of the fiber aggregate is excessively thin, the rigidity of the fiber aggregate may unintentionally decrease, potentially making it difficult to infiltrate solid electrolyte particles into the interior of the solid electrolyte membrane support comprising the fiber aggregate. Therefore, a thickness of 1 μm or more is realistic for the fiber aggregate, and 5 μm or more is more realistic.

The term "thickness" as used herein refers to the value measured using outside-micrometers (measurable thickness: 0 to 25 mm, load applied to the measured object during measurement: 150 kPa) specified in JIS B7502:1994.

The apparent density of the fiber aggregate can be calculated by dividing the mass per unit area by the thickness. The apparent density of the fiber aggregate can be 0.05 to 0.8 g/cm$^3$, 0.1 to 0.6 g/cm$^3$, or 0.125 to 0.5 g/cm$^3$.

The greater the tensile strength of the fiber aggregate, the more resistant the solid electrolyte membrane support becomes to deformation under external forces during manufacturing steps of solid electrolyte membranes or during processing steps for use in solid-state batteries, as well as during manufacturing steps of solid-state batteries or during use of solid-state batteries. As a result, a support for solid electrolyte membranes that is resistant to solid electrolyte particle detachment can be realized.

The tensile strength in the machine direction (MD direction) of the fiber aggregate is preferably greater than 4 N/50 mm, and more preferably 5 N/50 mm or greater. The tensile strength in the direction perpendicular to the machine direction on the main surface of the fiber aggregate (CMD direction) is preferably 1 N/50 mm or greater, and more preferably greater than 1 N/50 mm.

On the other hand, if the tensile strengths in the MD and CMD directions are excessively high, it may become difficult to realize a solid electrolyte membrane support that is easy to manufacture solid-state batteries. Therefore, 500 N/50 mm or less is realistic.

This "tensile strength" can be measured by subjecting the fiber aggregate to the method described below.

(Method for measuring tensile strength)

(1) Rectangular samples (short side: 50 mm, long side: 200 mm) are taken from the measurement target. At this time, the samples are taken so that the production direction of the measurement target is parallel to the long side direction.
(2) Using a tensile testing machine (manufactured by Orientec Co., Ltd., product name: Tensilon (registered trademark), model TM-111-100), the sample is pulled along its long side direction until break occurs under the following conditions: a distance between clamps of 100 mm and a tensile speed of 300 mm/min.
(3) The maximum stress measured up to the point of the sample break is defined as the "tensile strength". In this manner, the tensile strength (N/50 mm) in the direction parallel to the long side of the sample (MD direction) is measured. The same measurement is performed on five samples, and the average tensile strength obtained was taken as the tensile strength in the MD direction (N/50 mm).
(4) Rectangular samples (short side: 50 mm, long side: 200 mm) are taken from the measurement target. At this time, the samples are taken so that the production direction of the measurement target is perpendicular to the long side direction.
(5) The samples collected in the aforementioned step (4) are supplied to steps (2) to (3). Using the samples, the tensile strength (N/50 mm) in the direction parallel to the long side of the sample (CMD direction) is measured. The same measurement was performed on five samples, and the average tensile strength obtained is taken as the tensile strength in the CMD direction (N/50 mm).

The fiber aggregate may be fed into a calendering device or other means for adjusting various physical properties such as thickness and surface smoothness. Additionally, it may be processed by punching or other means according to the intended use.

The fiber aggregate in the present invention can be used alone as a support for solid electrolyte membranes. Alternatively, it may be a solid electrolyte membrane support in which a different fiber aggregate, a film (for example, a porous film), a foam, or other constituent members are laminated onto the fiber aggregate.

Various physical properties such as the mass per unit area, thickness, or apparent density of the solid electrolyte membrane support can be adjusted as appropriate. The mass per unit area of the solid electrolyte membrane support may be 6 g/m$^2$ or less. Furthermore, in order to achieve a solid electrolyte membrane with reduced thickness and reduced internal resistance, it is preferably 5.5 g/m$^2$ or less, 5 g/m$^2$ or less, 4 g/m$^2$ or less, or 3 g/m$^2$ or less. On the other hand, if the mass per unit area of the solid electrolyte membrane support is excessively low, the rigidity of the solid electrolyte membrane support may unintentionally decrease, potentially making it difficult to infiltrate solid electrolyte particles into the interior of the solid electrolyte membrane support comprising the fiber aggregate. Therefore, a mass per unit area of the solid electrolyte membrane support of 0.5 g/m$^2$ or more is realistic, and 1 g/m$^2$ or more is more realistic.

By being a thin support for solid electrolyte membranes, it enables the realization of a solid electrolyte membrane with reduced internal resistance in the direction of the membrane thickness. Therefore, the thickness of the solid electrolyte membrane support is preferably 25 μm or less, and preferably 20 μm or less. On the other hand, if the thickness of the solid electrolyte membrane support is excessively thin, the rigidity of the solid electrolyte membrane support unintentionally decreases. As a result, there is a potential concern that it may become difficult to infiltrate solid electrolyte particles into the interior of the solid electrolyte membrane support comprising the fiber aggregate. Therefore, a thickness of the solid electrolyte membrane support of 1 μm or more is realistic, and 5 μm or more is more realistic.

The apparent density of the support for solid electrolyte membranes can be calculated by dividing the mass per unit area by the thickness. The apparent density of the support for solid electrolyte membranes can be 0.05 to 0.8 g/cm$^3$, 0.1 to 0.6 g/cm$^3$, or 0.125 to 0.5 g/cm$^3$.

As described above, when using a solid electrolyte membrane prepared by using the solid electrolyte membrane support described in the prior art, solid electrolyte particles have difficulty infiltrating the interior of the solid electrolyte membrane support comprising said fiber aggregate. As a result, a large amount of solid electrolyte particles sometimes became unevenly distributed on one main surface side of the solid electrolyte membrane support. In particular, when solid electrolyte particles were imparted and carried onto one main surface of the solid electrolyte membrane support, a large amount of solid electrolyte particles sometimes became unevenly distributed on one main surface side of the solid electrolyte membrane support (the side imparted with solid electrolyte particles).

In other words, the solid electrolyte membrane described in the prior art also had the problem that the reinforcement of the solid electrolyte membrane by the solid electrolyte membrane support was insufficient due to the uneven distribution of a large amount of solid electrolyte particles on one main surface side of the solid electrolyte membrane.

By contrast, in the solid electrolyte membrane prepared using the solid electrolyte membrane support of the present invention, solid electrolyte particles readily infiltrate into the interior of the solid electrolyte membrane support comprising said fiber aggregate. Therefore, the uneven distribution of a large amount of solid electrolyte particles on one main surface side is prevented. In particular, even when solid electrolyte particles are imparted and carried onto one main surface of the solid electrolyte membrane support, the uneven distribution of a large amount of solid electrolyte particles on the main surface side is prevented. Therefore, the uniform carrying of the solid electrolyte particles enables the realization of a solid electrolyte membrane effectively reinforced by the support for solid electrolyte membranes.

Next, we will exemplify and explain the method of producing the support for solid electrolyte membranes according to the present invention. For items that share the same constituent features as those already explained, the explanation will be omitted.

The method of producing the support for solid electrolyte membranes according to the present invention comprises, for examples, the steps of:

(1) performing a wet-laid process using a dispersion containing fibers, and
(2) removing a dispersion medium contained in the residual dispersion by supplying it to a heating device and cooling it to prepare a fiber aggregate.

The concentrations and ratios of components constituting the dispersion, such as a dispersion medium, a dispersant, and a thickener, which are used when preparing the dispersion, is adjusted as appropriate so as to realize a fiber aggregate satisfying the constituent features of the present invention. As a result of the inventors' continued investigation, in this process, a surfactant (such as a nonionic surfactant that generates minimal foam and can be easily used in combination with other ionic dispersants or thickeners) as the dispersant, and a thickener (such as an anionic thickener) to stabilize the dispersion state are added, and the wet-laid process is performed. By employing this wet-laid process, we found that it is possible to produce a fiber aggregate possessing the physical properties specified by the present invention (such as maximum pore size and minimum pore size), despite having a mass per unit area of 6 g/m$^2$ or less.

Additionally, when heat-fusible fibers are present in the fiber web, the residual dispersing medium may be removed when the web is supplied to the heating device in step (2). At this time, simultaneously, the low-melting-point component contained in said heat-fusible fiber may be melted, and subsequently, the constituent fibers may be fused to each other by cooling said low-melting-point component. Alternatively, said fusion may be performed after removing the dispersing medium.

The heating device can be selected as appropriate from, for example, methods using devices such as a device of heating or heating under pressure by rollers, an oven dryer, a far-infrared heater, a dry-heat dryer, a hot-air dryer, or a device capable of heating by infrared irradiation. The heating temperature in the heating device is selected as appropriate. It is adjusted to ensure that residual dispersing medium can be volatilized and removed, while also preventing unintended decomposition or denaturation of constituent components such as constituent fibers.

The fiber aggregate satisfying the constitution of the present invention can be produced by the production method as above. The prepared fiber aggregate may be used as a support for solid electrolyte membranes as is. However, it may also be subjected to various processing steps, such as surface treatment using, for example, plasma treatment, corona treatment, or activator treatment; feeding into a pressurizing device such as a calender to smooth the surface or adjust porosity and thickness; or punching according to the intended use.

In particular, by being a surface-treated fiber aggregate, its affinity with a dispersion containing solid electrolyte particles is enhanced. Therefore, uniformly carried solid electrolyte particles and rich ionic conductivity enables the realization of a solid electrolyte membrane with reduced internal resistance. As a result, it is preferable to realize a solid-state battery with high power generation performance.

Alternatively, a laminate of the fiber aggregate with a different fiber aggregate, a film (for example, a porous film), a foam, or other constituent members may be used as the support for solid electrolyte membranes.

By imparting and carrying solid electrolyte particles onto one main surface of the solid electrolyte membrane support according to the present invention, a solid electrolyte membrane reinforced by the solid electrolyte membrane support can be manufactured. As other methods for imparting and carrying solid electrolyte particles onto the solid electrolyte membrane support, known methods, for example, a method of impregnating the solid electrolyte membrane support into a slurry containing dispersed solid electrolyte particles; or a method of laminating solid electrolyte particles spread on the main surface of a film onto the main surface of the solid electrolyte membrane support, and transferring the solid electrolyte particles to the solid electrolyte membrane support, can be adopted.

The type and amount of the solid electrolyte particles can be adjusted as appropriate according to the intended use.

Solid electrolyte particles may be selected from those known in the art. Solid electrolyte particles made from materials such as sulfide-based materials, crystalline oxide-based materials, complex hydride-based materials, halide materials, or polymer materials may be used. Furthermore, the particle size of the solid electrolyte particles may also be selected from known values. However, for example, as disclosed in JP 2022-151318 A, it is preferable to use solid electrolyte particles with a particle size of 10 $\mu$m or less, based on the finding that this enables the realization of a solid electrolyte membrane with high ionic conductivity and reduced internal resistance. The term "particle size" as used herein refers to the volume cumulative particle size D50, which is determined from the volume-based particle size distribution chart. The particle size distribution can be obtained not only by measurement using a laser diffraction particle size analyzer but also by measurement using a scanning electron microscope.

Furthermore, solid electrolyte particles may be adhered to the surfaces of the constituent fibers in the fiber aggregate using an adhesive, so that the solid electrolyte particles can be firmly carried within the voids of the fiber aggregate contained in the solid electrolyte membrane support.

EXAMPLES

The present invention now will be further illustrated by, but is by no means limited to, the following Examples.

(Comparative Example 1)

Partially-fused-type heat-fusible composite fibers (tensile strength: 6 cN/dtex, Young's modulus: 45 cN/dtex, the fiber surface except for both ends was coated with high-density polyethylene, volume ratio of core: sheath = 60:40, fineness: 0.8 dtex, fiber diameter: 10 $\mu$m, Fiber length: 5 mm) comprising polypropylene (a high-melting-point component, melting point: 168°C) as the core component and high-density polyethylene (a low-melting-point component, melting point: 135°C) as the sheath component were prepared.

Furthermore, polypropylene ultra-fine short fibers (fiber diameter: 2 $\mu$m, fiber length: 3 mm, melting point: 168°C, cross-sectional shape: circular) were prepared. The polypropylene ultra-fine short fibers were not fibrillated and were stretched, with each fiber having the same fiber diameter.

Next, 50% by mass of the heat-fusible composite fibers and 50% by mass of the polypropylene ultra-fine short fibers were dispersed in water, along with a nonionic surfactant and an anionic thickener. The dispersion was subjected to a wet-laid process to form a fiber web.

Next, hot air at 140°C was passed through the prepared fiber web for 10 seconds. In this manner, the fiber web was dried while simultaneously melting only the low-melting-point component of the heat-fusible composite fibers. Subsequently, a nonwoven fabric, in which the constituent fibers were thermally bonded to each other, was prepared by cooling. Then, the prepared nonwoven fabric was subjected to a plasma treatment for surface modification. Subsequently, the nonwoven fabric was calendered at 70°C to achieve a thickness of 20 μm, thereby producing a support for solid electrolyte membranes.

(Examples 1 to 2 and Comparative Example 2)

Except for changing the amount of fibers dispersed in the dispersion medium to obtain supports for a solid electrolyte membrane with the mass per unit area listed in Table 1, the supports for a solid electrolyte membrane were produced in the same manner as Comparative Example 1.

(Examples 3 to 5)

Except for changing the amount of fibers dispersed in the dispersion medium to obtain supports for a solid electrolyte membrane with a mass per unit area of 3 g/m$^2$, and except for changing the thickness adjustment by the calender to obtain the supports for a solid electrolyte membrane with the thickness listed in Table 1, the supports for a solid electrolyte membrane were produced in the same manner as Comparative Example 1.

(Comparative Example 3 and Example 6)

Except for changing the mass ratio of the fibers to be dispersed in the dispersion to that listed in Table 1, the supports for a solid electrolyte membrane were produced in the same manner as Example 3.

Table 1 summarizes the constituent features of the supports for a solid electrolyte membrane produced in the above Examples and Comparative Examples.

[Table 1]

| | | Comp. Ex. 1 | Example 1 | Example 2 | Comp. Ex. 2 | Example 3 | Example 4 | Example 5 | Comp. Ex. 3 | Example 6 |
|---|---|---|---|---|---|---|---|---|---|---|
| Constituent features of fiber aggregates | Percentage of heat-fusible composite fiber mass in constituent fiber mass (mass %) | 50 | 50 | 50 | 50 | 50 | 50 | 50 | 30 | 70 |
| | Percentage of polypropylene ultrafine short fiber mass in constituent fiber mass (mass %) | 50 | 50 | 50 | 50 | 50 | 50 | 50 | 70 | 30 |
| | Average fiber diameter (μm) | 2.8 | 2.8 | 2.8 | 2.8 | 2.8 | 2.8 | 2.8 | 2.4 | 3.6 |
| | Mass per unit area (g/m$^2$) | 6 | 5 | 2.5 | 2 | 3 | 3 | 3 | 3 | 3 |
| | Thickness (μm) | 20 | 20 | 20 | 20 | 15 | 10 | 6 | 15 | 15 |
| | Apparent density (g/m$^3$) | 0.300 | 0.250 | 0.125 | 0.100 | 0.200 | 0.300 | 0.500 | 0.200 | 0.200 |
| | Porosity (%) | 67 | 73 | 86 | 89 | 78 | 67 | 45 | 78 | 78 |
| | Maximum pore size (μm) | 20 | 25 | 175 | 210 | 73 | 44 | 41 | 32 | 180 |
| | Minimum pore size (μm) | 8 | 10 | 20 | 22 | 14 | 13 | 12 | 8 | 19 |
| | Average pore size (μm) | 15 | 16 | 29 | 33 | 20 | 18 | 15 | 15 | 28 |
| | Variation in pore sizes (%) | 80 | 94 | 534 | 570 | 295 | 172 | 193 | 160 | 575 |
| | Tensile strength in MD direction (N/50 mm) | 17 | 14 | 5 | 4 | 6 | 6 | 6 | 4 | 10 |
| | Tensile strength in CMD direction (N/50 mm) | 5 | 4 | 1 | <1 | 1 | 1 | 1 | <1 | 2 |

Furthermore, the results of evaluating simulated solid electrolyte membranes prepared by coating the solid electrolyte membrane supports prepared in the Examples and Comparative Examples with either Dispersion a or Dispersion b using the following methods are summarized in Table 2.

(A; Method for evaluating whether large pinholes are present)

1. Square-shaped samples (side length: 50 mm) were cut from the solid electrolyte membrane support.
2. A polyethylene terephthalate film was prepared.
3. One main surface of the collected sample was exposed, and the other main surface was brought into contact with the main surface of the film.

4. Silica particles (particle size: 5 μm) were prepared as particles simulating solid electrolyte particles. Then, Dispersion a was prepared by dispersing 94 parts by mass of the prepared silica particles and 6 parts by mass of an adhesive, polyvinylidene fluoride-acrylic copolymer (average particle size: 0.2 μm) in water. Furthermore, another silica particles (particle size: 10 μm) were prepared as a particle simulating solid electrolyte particles. Then, Dispersion b was prepared by dispersing 94 parts by mass of the prepared silica particles and 6 parts by mass of an adhesive, polyvinylidene fluoride-acrylic copolymer (average particle size: 0.2 μm) in water.

5. Using a bar coater, Dispersion a or Dispersion b was applied to the exposed main surface (one main surface) of the sample. At this time, an 80-μm gap was maintained between the bar coater and the main surface of the sample.

6. The sample coated with Dispersion a or Dispersion b was placed in a dryer set to 110°C to remove water. Subsequently, the film was peeled off, and a simulated solid electrolyte membrane (side length: 50 mm, thickness: 80 μm) carrying silica particles, instead of solid electrolyte particles, on the solid electrolyte membrane support was prepared.

7. The simulated solid electrolyte membrane was placed over a light source (LED2500) of a microscope (Leica Microsystems, model: S8 APO).

8. The simulated solid electrolyte membrane was observed in a darkroom. In this observation, it was confirmed whether any area of 31,400 μm$^2$ or larger (equivalent to or larger than the area of a perfect circle with a diameter of 200 μm; hereinafter referred to as a large pinhole) existed within the portion where light transmitted from one main surface of the solid electrolyte membrane support toward the other main surface.

9. Steps 7 to 8 were repeated three times in other portions of the simulated solid electrolyte membrane.

If no large pinholes were observed in any of the confirmation results from the four measurements performed, the simulated solid electrolyte membrane used for measurement was judged not to contain large pinholes. For the solid electrolyte membrane support forming the simulated solid electrolyte membrane on which this judgment was made, "○" was entered in row A of Table 2.

By contrast, if a large pinhole was observed in at least one of the confirmation results from the four measurements performed, the simulated solid electrolyte membrane used for measurement was judged to contain a large pinhole. For the solid electrolyte membrane support forming the simulated solid electrolyte membrane on which this judgment was made, "×" was entered in row A of Table 2.

(B; Method for evaluating the present state of particles in the thickness direction of simulated solid electrolyte membrane)

1. The simulated solid electrolyte membrane prepared by the aforementioned (Method for evaluating whether large pinholes are present) was cut in the thickness direction. Then, electron micrographs of the cross-section were taken. At this time, the magnification of the electron micrograph was adjusted so that the entire thickness of the simulated solid electrolyte membrane would be captured in the height direction of the electron micrograph.

2. Regarding the cross-section of the simulated solid electrolyte membrane captured in the microscopic photograph, for a point on one main surface (the main surface on which the dispersion was applied when preparing the simulated solid electrolyte membrane) of the simulated solid electrolyte membrane, a line segment connecting said point to the other main surface of the simulated solid electrolyte membrane via the shortest distance was drawn on the microscope photograph.

3. Length 1 of the shortest distance, on the drawn line segment, from said given point to the solid electrolyte membrane support constituting the simulated solid electrolyte membrane was measured. Said Length 1 refers to the thickness of silica particles remaining on one main surface of the simulated solid electrolyte membrane (the main surface on which the dispersion was applied when preparing the simulated solid electrolyte membrane). When said length is 0, it means that no silica particles remain on one main surface of the simulated solid electrolyte membrane.

4. On the drawn line segment, Length 2 of the shortest distance from the contact point between said line segment and the other main surface of the simulated solid electrolyte membrane to the solid electrolyte membrane support constituting the simulated solid electrolyte membrane was measured. Said Length 2 refers to the thickness of silica particles formed on the other main surface of the simulated solid electrolyte membrane. When said length is 0, it means that no layer of silica particles is formed on the other main surface of the simulated solid electrolyte membrane.

5. Compare the ratio of Length 1 to Length 2. The length of the drawn line segment is longer than the sum of Length 1 and Length 2.

When both Length 1 and Length 2 were greater than 0, and the proportion of Length 1 to the sum of Length 1 and Length 2 (with the sum set to 100) was less than 80, for the solid electrolyte membrane support forming this simulated solid electrolyte membrane on which this judgment was made, "○" was entered in row B of Table 2.

The support for solid electrolyte membranes forming such solid electrolyte membranes is considered to facilitate the infiltration of solid electrolyte particles from one main surface through the interior of the solid electrolyte membrane support (within the voids of the fiber aggregate) to the other main surface of the solid electrolyte membrane support.

Furthermore, on the drawn line segment, when silica particles were present within the voids of the solid electrolyte membrane support, and both length 1 and length 2 were 0, "○" was also entered in row B of the Table 2. The support for solid electrolyte membranes forming such solid electrolyte membranes facilitates the infiltration of solid electrolyte particles from one main surface through the interior of the solid electrolyte membrane support (within the voids of the fiber aggregate). Therefore, when the carrying amount of solid electrolyte particles is increased, the support for solid electrolyte membranes is considered to facilitate the infiltration of solid electrolyte particles from one main surface through the interior of the solid electrolyte membrane support (within the voids of the fiber aggregate) to the other main surface of the solid electrolyte membrane support.

Therefore, by using a solid electrolyte membrane support comprising such fiber aggregates, it is possible to realize a solid electrolyte membrane in which a large amount of solid electrolyte particles are not unevenly distributed on one main surface (the main surface to which solid electrolyte particles were applied when preparing the solid electrolyte membrane) of the solid electrolyte membrane. Specifically, the solid electrolyte membrane support exists without being extremely biased toward one main surface of the solid electrolyte membrane (for example, when the solid electrolyte membrane support is exposed and exists on one main surface of the solid electrolyte membrane). Therefore, it is possible to realize a solid electrolyte membrane efficiently reinforced by said solid electrolyte membrane support. Specifically, a solid electrolyte membrane with a Length 1:Length 2 of 78:22 to 50:50 can be realized.

On the other hand, when both Length 1 and Length 2 are greater than 0, and the proportion of Length 1 to the sum of Length 1 and Length 2 (with the sum set to 100) is 80 or more, for the solid electrolyte membrane support forming this simulated solid electrolyte membrane, "×" was entered in row B of the Table 2. The support for solid electrolyte membranes forming such simulated solid electrolyte membranes has difficulty in infiltrating solid electrolyte particles from one main surface through the interior of the solid electrolyte membrane support (within the voids of the fiber aggregate) to the other main surface of the solid electrolyte membrane support.

Therefore, by using a support for solid electrolyte membranes comprising such fiber aggregates, it is difficult to realize a solid electrolyte membrane in which a large amount of solid electrolyte particles are not unevenly distributed on one main surface (the main surface to which solid electrolyte particles were applied when preparing the solid electrolyte membrane) of the solid electrolyte membrane. Therefore, it is difficult to realize a solid electrolyte membrane effectively reinforced by said support for solid electrolyte membranes.

(C; Method for evaluating the distribution pattern of pinholes)

1. The simulated solid electrolyte membrane prepared by the aforementioned (Method for evaluating whether large pinholes are present) was prepared.

2. The collected square-shaped sample was placed over a light source (LED2500) of a microscope (Leica Microsystems, model: S8 APO). At this time, a rectangular area (vertical: 10 mm, horizontal: 13 mm) on the main surface of said sample was designated as the measurement range. Furthermore, the measurement range was divided into three vertical sections and four horizontal sections. In this manner, a total of 12 measurement sections, each of equal size, were defined.

3. Observations were made in the darkroom. In said observation, for each of the measured sections, it was confirmed whether an area of 314 $\mu$m$^2$ or more (an area equal to or greater than that of a perfect circle with a diameter of 20 $\mu$m; hereafter referred to as a pinhole) existed within the area where light transmitted from one main surface to the other surface.

4. Steps 2 to 3 were repeated three times in other sections of the simulated solid electrolyte membrane.

If pinholes were present in 24 or fewer measurement sections out of the total 4 measurements (i.e., out of the total 48 measurement sections measured), or if no pinholes were present, the solid electrolyte membrane support was judged to uniformly carry solid electrolyte particles across the main surface direction. Therefore, it was judged to have high ionic conductivity and reduced internal resistance. For the solid electrolyte membrane support forming the simulated solid electrolyte membrane on which this judgment was made, "○" was entered in row C of Table 2.

By contrast, if pinholes were present in 25 or more measurement sections, said solid electrolyte membrane support was judged not to uniformly carry solid electrolyte particles across the main surface direction compared to the solid electrolyte membrane support evaluated as "○". Therefore, it was judged that the ionic conductivity was poor and the internal resistance was not reduced. For the solid electrolyte membrane support forming the simulated solid electrolyte membrane on which this judgment was made, "Δ" was entered in row C of Table 2.

[Table 2]

| | | | Types of fiber aggregates constituting simulated solid electrolyte membranes | | | | | | | | |
|---|---|---|---|---|---|---|---|---|---|---|---|
| | | | Comp. Ex. 1 | Example 1 | Example 2 | Comp. Ex. 2 | Example 3 | Example 4 | Example 5 | Comp. Ex. 3 | Example 6 |
| Physical properties of simulated solid electrolyte membranes | Application of Dispersion a | A | ○ | ○ | ○ | × | ○ | ○ | ○ | ○ | ○ |
| | | Ratio of Length 1 : Length 2 | 85:15 | 70:30 | 60:40 | 55:45 | 63:37 | 70:30 | 78:22 | 80:20 | 65:35 |
| | | B | × | ○ | ○ | ○ | ○ | ○ | ○ | × | ○ |
| | | C | ○ | ○ | ○ | △ | ○ | ○ | ○ | ○ | △ |
| | Application of Dispersion b | A | ○ | ○ | ○ | × | ○ | ○ | ○ | ○ | ○ |
| | | Ratio of Length 1 : Length 2 | 95:5 | 70:30 | 60:40 | 55:45 | 63:37 | 70:30 | 78:22 | 95:5 | 65:35 |
| | | B | × | ○ | ○ | ○ | ○ | ○ | ○ | × | ○ |
| | | C | ○ | ○ | ○ | △ | ○ | ○ | ○ | ○ | △ |

Comparing Comparative Example 1 and Examples 1 to 2 with Comparative Example 2 revealed that, in the supports for a solid electrolyte membrane comprising a fiber aggregate with a mass per unit area of 6 g/m$^2$ or less, a solid electrolyte membrane can be realized in which the formation of large pinholes is prevented by setting the maximum pore size of the fiber aggregate to less than 210 μm. Furthermore, it was found that a solid electrolyte membrane wherein the uneven distribution of a large amount of solid electrolyte particles on one main surface side was prevented could be realized, by setting the minimum pore size of the fiber aggregate to greater than 8 μm.

Furthermore, comparing Comparative Examples 1 and 3 and Examples 1 to 5 with Comparative Example 2 and Example 6 revealed that, in the supports for a solid electrolyte membrane comprising a fiber aggregate with a mass per unit area of 6 g/m$^2$ or less, a solid electrolyte membrane with uniformly carried solid electrolyte particles across the main surface direction can be realized by ensuring that the variation in pore sizes of the fiber aggregate is less than 570%.

INDUSTRIAL APPLICABILITY

The present invention is a support for solid electrolyte membranes capable of forming a solid electrolyte membrane for solid-state batteries by carrying solid electrolyte particles. The solid-state batteries may include not only all-solid-state batteries, but also semi-solid-state batteries containing a small amount of liquid mixed with the solid electrolyte, or semi-solid-state batteries equipped with a gel-like electrolyte.

**Claims**

1. A support for solid electrolyte membranes comprising a fiber aggregate with a mass per unit area of 6 g/m$^2$ or less, wherein a maximum pore size of the fiber aggregate is less than 210 μm, and a minimum pore size of the fiber aggregate is greater than 8 μm.

2. The support for solid electrolyte membranes according to claim 1, wherein a variation in pore sizes of the fiber aggregate is less than 570%.

3. The support for solid electrolyte membranes according to claim 1, wherein constituent fibers of the fiber aggregate are composed solely of a polyolefin-based resin.

4. The support for solid electrolyte membranes according to claim 1, wherein the fiber aggregate contains core-sheath composite fibers as its constituent fibers, and the constituent fibers are fiber-bonded to each other by the core-sheath composite fibers.

5. The support for solid electrolyte membranes according to claim 1, wherein the fiber aggregate has a porosity of 45% or more.

6. The support for solid electrolyte membranes according to claim 1, wherein the fiber aggregate has a thickness of 25 μm or less.

7. A solid electrolyte membrane comprising solid electrolyte particles carried on the support for solid electrolyte membranes according to any one of claims 1 to 6.

8. A solid-state battery comprising the solid electrolyte membrane according to claim 7.

## INTERNATIONAL SEARCH REPORT

| International application No. |
|---|
| **PCT/JP2024/028769** |

**A. CLASSIFICATION OF SUBJECT MATTER**

*H01M 50/44*(2021.01)i; *H01M 10/0562*(2010.01)i; *H01M 50/417*(2021.01)i; *H01M 50/434*(2021.01)i; *H01M 50/443*(2021.01)i; *H01M 50/446*(2021.01)i; *H01M 50/489*(2021.01)i; *H01M 50/491*(2021.01)i
FI:   H01M50/44; H01M10/0562; H01M50/417; H01M50/491; H01M50/489; H01M50/434; H01M50/443 M; H01M50/446

According to International Patent Classification (IPC) or to both national classification and IPC

**B. FIELDS SEARCHED**

Minimum documentation searched (classification system followed by classification symbols)

H01M50/40 - 50/497; H01M10/056 - 10/0562; D04H1/00 - 1/76

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-108371 A (SHINSHU UNIVERSITY) 04 August 2023 (2023-08-04) paragraphs [0018]-[0021], [0038], [0042]-[0045], [0086]-[0094], [0126], tables 1-2, 2, 5, fig. 8A-8D | 1-3 |
| Y | | 4-8 |
| Y | JP 2021-028869 A (JAPAN VILENE CO., LTD.) 25 February 2021 (2021-02-25) paragraphs [0011], [0017], [0019], [0032]-[0036], [0050]-[0051], [0065], table 1 | 4-8 |
| A | JP 2013-012431 A (SANYO ELECTRIC CO., LTD.) 17 January 2013 (2013-01-17) paragraphs [0017]-[0018] | 4 |
| A | WO 2012/014501 A1 (MITSUI CHEMICALS, INC.) 02 February 2012 (2012-02-02) paragraphs [0020]-[0025], [0031]-[0032], [0034]-[0035], [0043], [0088], table 1 | 5 |

☐ Further documents are listed in the continuation of Box C.    ☑ See patent family annex.

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/028769**

| Patent document cited in search report | | | Publication date (day/month/year) | Patent family member(s) | Publication date (day/month/year) |
|---|---|---|---|---|---|
| JP | 2023-108371 | A | 04 August 2023 | (Family: none) | |
| JP | 2021-028869 | A | 25 February 2021 | (Family: none) | |
| JP | 2013-012431 | A | 17 January 2013 | (Family: none) | |
| WO | 2012/014501 | A1 | 02 February 2012 | US 2013/0122771 A1 paragraphs [0045]-[0051], [0057]-[0058], [0060]-[0061], [0073], [0128], table 1 EP 2599908 A1 paragraphs [0020]-[0025], [0031]-[0032], [0034]-[0035], [0043], [0089], table 1 CN 103038407 A KR 10-2013-0061713 A | |

Form PCT/ISA/210 (patent family annex) (July 2022)

**EP 4 760 951 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021028869 A
- JP 2009287138 A
- JP 2022151318 A